# DEMANDE DE BREVET EUROPEEN

(11) **EP 1 162 841 A1**
(43) Date de publication de la demande: **12.12.2001**
(21) Numéro de dépôt: 01401258.7
(22) Date de dépôt: 15.05.2001
(51) Int. Cl.: H04N 7/16

(54) **Serveur traducteur pour décodeur de télévision et procédé de transcodage associé**

(30) Priorité: 06.06.2000 FR 0007257
(71) Demandeur: SAGEM S.A., 75015 Paris (FR)
(72) Inventeur: Cummings, John, 78600 Maisons-Laffitte (FR); Mortreux, Bruno, 76530 Les Essart (FR)
(74) Mandataire: Schmit, Christian Norbert Marie

(57) **Abrégé**

Pour permettre à un décodeur de télévision, relié au réseau Internet, ne pouvant traiter que des formats de données de type MPEG 2, de recevoir et utiliser des flux d'information codés selon d'autres formats alors le décodeur est associé à un serveur traducteur avec lequel il coopère afin de transcoder ces nouveaux formats dans le format natif du décodeur de télévision c'est à dire le format MPEG 2. Pour cela, le décodeur, recevant ce flux d'information codé, émet une requête au serveur traducteur en lui indiquant de quel format il s'agit. Le serveur répond alors à cette requête en transmettant au décodeur un programme de transcodage permettant de passer du format indiqué dans la requête au format MPEG 2. Le décodeur de télévision devient ainsi un décodeur multiformat.

## Description

La présente invention a pour objet un serveur traducteur pour décodeur de télévision. Elle a aussi pour objet un procédé de transcodage associé. Elle s'applique au domaine de la télévision numérique et plus particulièrement aux décodeurs de télévision numériques reliés notamment à un réseau de transmission de données. Le but de l'invention est de permettre au décodeur de télévision de traiter des informations reçues du réseau de transmission de donnée selon un format non compréhensible par le décodeur. Un traitement du flux codé reçu signifie en fait une transmission à un téléviseur sous forme de signaux compréhensibles par ce dernier tel que, par exemple, sous la forme d'un signal vidéo composite.

Actuellement, un décodeur de télévision n'est généralement compatible qu'avec un seul format de donnés, le plus souvent le format dit MPEG 2 (Moving Picture Expert Group pour groupe d'experts des images animées). Ainsi, un flux de donnés reçu par le décodeur doit, pour pouvoir être interprété correctement, être codé selon le format MPEG 2. Or, un développement des réseaux de transmission de données tel que le réseau dit Internet a conduit à un développement des décodeurs de télévision. Dorénavant, les décodeurs de télévision, ou tout du moins une partie, peuvent être connectés au réseau Internet. En conséquence, un décodeur peut maintenant recevoir, on dit généralement télécharger, des applications les plus variées dans des formats tout aussi variés. Ainsi, le décodeur de télévision peut recevoir un flux de données audio, vidéo, etc.... Chaque type de données peut en outre être codé dans un format spécifique propriétaire ou non. Pour faire face à tous ces formats possibles et à venir, il faudrait pouvoir réaliser des décodeurs de télévision du type multiformat c'est-à-dire qui pourrait interpréter un maximum de formats possibles.

Ceci est difficilement réalisable. En effet, chaque jour le réseau Internet s'agrandit et des formats nouveaux apparaissent. Par ailleurs, les décodeurs actuels ne sont compatibles qu'avec un seul format de données.

L'invention a pour objet de remédier à ces problèmes en proposant un procédé de transcodage et un dispositif associé permettant à un flux codé dans un format non compréhensible par le décodeur de télévision d'être transcodé dans un format compréhensible par ce même décodeur. Pour cela le flux codé sera transcodé dans le format connu du décodeur de télévision.

L'invention concerne donc un procédé de transcodage d'un flux d'informations reçu dans un décodeur de télévision et codé dans un format non compréhensible par le décodeur, caractérisé en ce que
- le décodeur émet une requête à destination d'un serveur traducteur relié à un réseau de données ; et
- le serveur traducteur coopère avec le décodeur pour transcoder le flux codé dans un format compréhensible par le décodeur.

Elle concerne aussi un décodeur de télévision caractérisé en ce qu'il est relié à travers un réseau de données à un serveur traducteur et en ce que le décodeur et ou le serveur traducteur comportent un moyen de traduction pour coopérer afin de transcoder un flux d'information reçu par le décodeur et codé dans un format non compréhensible par celui-ci.

La présente invention sera mieux comprise à la lecture de la description qui suit et à l'examen des figures qu'ils accompagnent. Celles ci ne sont présentées qu'à titre indicatif et nullement limitatif de l'invention. Les figures montrent:
- Figure 1 : Une représentation simplifiée d'une architecture du dispositif de l'invention ;
- Figure 2 : Une représentation sous une forme d'un algorithme d'un fonctionnement du procédée de l'invention.

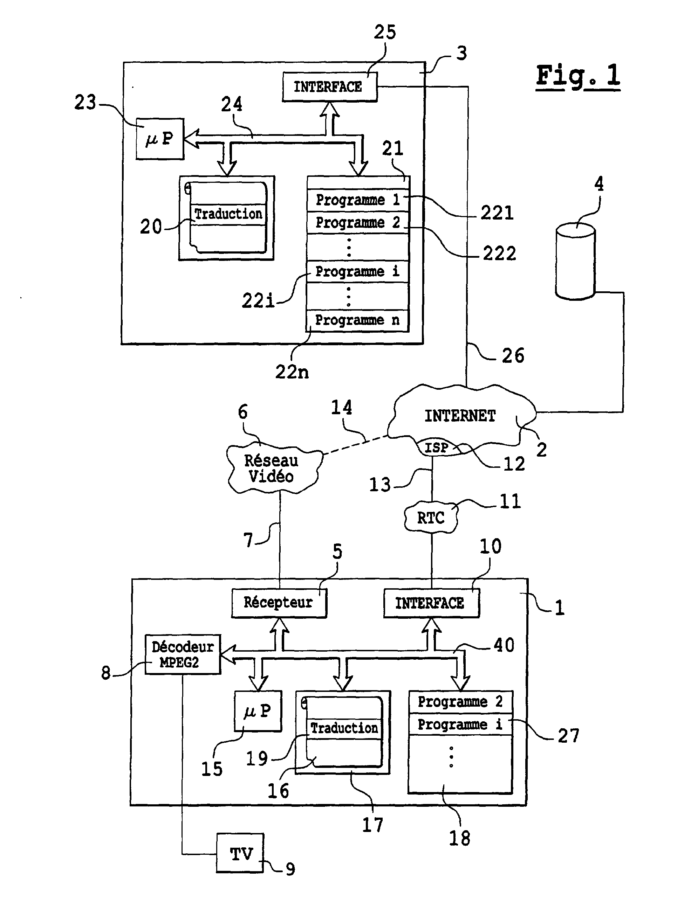

La figure 1 montre un exemple d'architecture mettant en oeuvre un décodeur 1 de télévision selon l'invention relié, par l'intermédiaire d'un réseau 2 de données, à un serveur 3 traducteur. Le réseau 2 est un réseau permettant au décodeur 1 d'accéder à un serveur 4 d'applications, c'est-à-dire un serveur comportant une ou plusieurs informations dont une copie peut être émise en direction du décodeur 1 et à sa demande sous une forme d'un flux d'informations. On dit alors que le décodeur 1 a téléchargé une application. Dans un exemple, le réseau 2 est le réseau dit Internet. Ce réseau Internet est en fait constitué par l'interconnexion de milliers de réseaux chacun permettant de se connecter à un ou plusieurs serveurs tel que le serveur 4. En conséquence, sur ce type de réseau, des serveurs tel que le serveur 4 sont très nombreux. Ainsi, un nombre d'applications pouvant être téléchargées est tout aussi important. Cependant, ces applications à télécharger ne sont pas toutes codées selon un même format. En outre, le décodeur 1 est quant à lui réalisé en ayant pour fonction primaire de décoder un flux de télévision, c'est-à-dire un flux d'informations de type audiovisuelles.

Le décodeur 1 comporte habituellement un récepteur 5 d'un flux vidéo reçu d'un réseau 6 vidéo ou encore réseau câblé au travers d'une liaison 7 de type généralement coaxial, tout autre type de liaison pouvant être envisagé tel qu'une liaison satellite par exemple. Un flux vidéo, avant d'être transmis, est compressé, ou plus généralement codé, afin de réduire un débit nécessaire à la transmission de ce flux. En conséquence, une fois reçu par le récepteur 5, ce flux doit être décodé et donc transmis à un décodeur 8. Ce décodeur 8 a en charge de décoder le flux vidéo reçu pour le transmettre à un téléviseur 9 sous une forme utilisable par ce dernier tel qu'un signal vidéo composite par exemple.

En outre, dans l'invention, le décodeur 1 est relié au réseau 2 et comporte pour cela une interface 10 ayant pour fonction principale d'établir une connexion avec le réseau 2 et assure une compatibilité de langage entre le réseau 2 et le décodeur 1. Selon une réalisation simple, la connexion au réseau 2 se fait via un réseau 11 de téléphonie fixe ou encore appelé réseau RTC (pour réseau téléphonique commuté). Ainsi, l'interface 10 prend la forme d'un modem. Cette manière connue, de se connecter au réseau 2, se fait généralement par l'intermédiaire d'un fournisseur d'accès 12 ou encore ISP 12 (Internet Service Provider pour fournisseur de service Internet en français). L'interface 10 établie une liaison 13 de type liaison téléphonique avec l'ISP 12. L'ISP 12 est utilisé ensuite comme passerelle entre le réseau 11 téléphonique et le réseau 2 pour lequel des signaux sont généralement transmis selon le protocole IP (Internet Protocol pour protocole Internet en français).

Dans une variante, on pourrait envisager que le décodeur 1 accède au réseau 2 à travers le réseau 6 par l'intermédiaire d'une liaison 14 optique par exemple. Cette solution offre l'avantage de permettre un plus grand débit à travers la liaison 7 par rapport à un débit à travers la liaison 13.

En outre, le décodeur 1 comporte un microprocesseur 15 commandé par un programme 16 dans une mémoire 17 de programme, une mémoire 18 de sauvegarde de données et un bus 40 d'adresses, de données et de commandes permettant aux différents éléments du décodeur 1 d'être reliés entre eux et permet aussi au microprocesseur 15 de pouvoir communiquer avec ces éléments afin de les gérés.

Dans l'invention, le décodeur 1 comporte un moyen 19 de traduction et le serveur 3 comporte un moyen 20 de traduction, ces deux moyens permettant au décodeur 1 et au serveur 3 de coopérer afin de transcoder un flux d'informations reçu par le décodeur 1 du serveur 4. Ce flux d'informations est codé dans un format non compréhensible par le décodeur 1 et plus précisément le décodeur 8. Ainsi, à la réception de ce flux d'informations par l'intermédiaire de l'interface 10 le microprocesseur 15, à l'aide du programme 16, détecte que ce flux d'informations est dans un format non compréhensible. Pour détecter que le flux reçu par le décodeur 1 est un flux codé selon un format non compréhensible par ce dernier, le microprocesseur 15 lie un entête de ce flux afin de détecter le format dans lequel ce flux à été codé.

En effet, le décodeur comporte un programme de navigation, non représenté, dans la mémoire 17 lui permettant de parcourir des fichiers présents dans le serveur 4. Ces fichiers sont généralement écrits dans un format dit HTML (HyperText Markup Langage pour langage de marquage de lien hypertexte). Le programme de navigation est un programme qui interprète les fichiers HTML reçus, c'est à dire les transforme en un format spécial de présentation nommé pages Web, et les affiche à l'utilisateur. Ainsi, une page web est le contenu affiché d'un fichier HTML. En outre, un fichier peut comporter des zones à sélectionner permettant d'accéder à un autre fichier HTML pouvant encapsuler un message audio ou vidéo généralement que l'utilisateur souhaite télécharger. Ce message audio ou vidéo correspond alors au flux audio ou vidéo que le décodeur reçoit et qui peut être codé dans un format non compréhensible par le décodeur.

Par exemple, lorsque dans une page web l'utilisateur sélectionne une telle zone relative à un message musical alors le serveur 4 émet le fichier HTML correspondant à destination du décodeur 1 avec en outre une information sur le format du message musical. C'est cette information qui permet au microprocesseur 15 de déterminer le format du flux codé reçu.

Le décodeur 1 envoie alors au serveur 3 une requête. Suite à cette requête, le serveur 3 coopère avec le décodeur 1 pour transcoder le flux codé dans un format compréhensible par le décodeur 1 et plus particulièrement le décodeur 8. Cette coopération peut être mise en oeuvre de deux manières différentes.

Il est entendu que, avant ou pendant cette phase de coopération, le flux codé reçu est sauvegardé dans une mémoire de masse non représentée afin de ne pas alourdir la description. Toutefois, cette mémoire peut être la mémoire 18. En outre, cette mémoire doit présenter une capacité suffisante pour pouvoir stocker au moins un message audio et ou vidéo, par exemple une dizaine de giga octets. La valeur de la capacité de stockage est libre seulement plus elle est importante et plus la mémoire peut stocker d'informations.

Une première mise en oeuvre préférée de l'invention consiste en ce que le serveur 3 fournit au décodeur 1 un programme de transcodage. Dans ce cas le serveur 3 émet un programme de transcodage à partir d'une mémoire 21 de sauvegarde de programmes 22 1, 22 2 à 22 n, chaque programme 22 1 à 22 n étant un programme de transcodage d'un format donné vers un format compréhensible par le décodeur 8. Le serveur 3 comporte en outre un microprocesseur 23 et un bus 24 de données, d'adresses et de commandes. Le serveur 3 comporte en outre une interface 25 permettant au serveur 3 d'être connecté au réseau 2 par intermédiaire d'une liaison 26. Cette liaison 26 sera de préférence une liaison haut débit permettant de faire transiter des flux d'informations à des débits supérieurs à plusieurs de dizaines de Megabits par seconde. En effet, plusieurs décodeurs tel que le décodeur 1 peuvent émettre des requêtes quasiment simultanément au serveur 3 qui devra leur répondre séparément. Cette liaison 26 peut être réalisée à l'aide d'une fibre optique, d'une paire torsadée ou tout autre média permettant de faire transiter des flux au débit. Ainsi, l'interface 25 permet principalement de mettre ou de recevoir des informations à destination ou en prévenance du réseau 2 respectivement, c'est à dire sous le format IP dans le cas du réseau Internet par exemple.

Dans cet exemple de mise en oeuvre préférée, le moyen 20 prend la forme d'un programme de gestion des requêtes du décodeur 1. Ainsi, lorsqu'une requête est reçue, le programme 20 commande le microprocesseur 23 pour lire un contenu de la requête, une requête comportant notamment une valeur du format associé au flux d'information codé reçu par le décodeur 1. Enfin, le programme 20 commande alors le microprocesseur 23 pour émettre, par l'intermédiaire de l'interface 25, le programme 22 1 à 22 n correspondant au format indiqué dans la requête. Le décodeur 1 reçoit alors le programme correspondant par exemple le programme 22 i. En fait, le décodeur 1 reçoit une copie de ce programme 22 i et sauvegarde cette copie dans la mémoire 18 sous la forme d'un programme 27 de transcodage.

Le moyen 19 du décodeur 1 prend la forme, dans cet exemple préféré, d'un programme de traduction présent dans la mémoire 17 de programme. Ce programme 19 a alors en charge de commander le microprocesseur 15 pour que ce dernier réalise une opération de transcodage sur le flux codé reçu. Le programme 19 est dans un exemple préféré le programme 27 ainsi reçu et sauvegardé dans la mémoire 18. Le microprocesseur est alors sous la commande du programme permettant de réaliser le transcodage du flux codé reçu. Ce programme 26 est placé, pour l'occasion, dans la mémoire 17 de programme. Cependant, le programme 19 pourrait être un programme de transcodage paramétrable et dont les paramètres seraient fournis par le programme 27 qui serait alors utilisé comme sous programme ou alors comme simple source de paramètres. La première solution du sous programme est la solution préférée.

En outre, chaque programme de transcodage reçu par le décodeur 1 est sauvegardé dans la mémoire 18 afin de devenir à chaque fois un peu plus autonome vis-à-vis du serveur 3. Ainsi, lorsqu'un flux d'information reçu est codé dans un format dorénavant connu, c'est à dire dont le programme de transcodage est présent dans la mémoire 18, alors le décodeur 1 n'envoie pas de requête au serveur 3.

Dans une variante de cet exemple préféré, on peut mettre en oeuvre un procédé de gestion d'un encombrement de la mémoire 18. En effet, la capacité de la mémoire 18 est finie et celle-ci sera alors limitée du point de vue du nombre de programme de transcodage qu'elle pourra sauvegarder. Ainsi, dans cette variante, le procédé de gestion permettra de supprimer le programme le moins utilisé pour libérer de l'espace mémoire lorsque la mémoire 18 sera remplie dès qu'un nouveau programme de transcodage devra être sauvegardé. Bien évidemment, ce procédé pourrait être encore affiné par exemple en proposant à un utilisateur un choix selon lequel il peut décider ou non de sauvegarder ce nouveau programme de transcodage. Ce procédé de gestion prend la forme généralement d'un programme (non représenté) dans la mémoire 17.

Une deuxième mise en oeuvre de l'invention pour permettre au serveur 3 de coopérer avec le décodeur 1 est envisageable. Dans cette deuxième mise en oeuvre, le décodeur 1 émet le flux codé dans le format non compréhensible par ce dernier au serveur 3. Le serveur 3 reçoit ce flux codé par l'intermédiaire de son interface 25 et du réseau 2. Le serveur 3 a ensuite en charge de traduire ce flux d'information dans un format compréhensible par le décodeur 8 et puis de le réémettre à destination du décodeur 1. Donc le décodeur 8 pourra décoder ce flux d'informations transcodé pour l'envoyer au téléviseur 9.

Dans cette deuxième variante, le moyen 20 est un programme de transcodage tel que l'un des programmes 22 1 à 22 n selon le cas et le programme 19 est un programme de gestion assurant notamment la préparation du contenu de la requête à envoyer au serveur 3.

La première mise en oeuvre est préférée à la deuxième mise en oeuvre car celle ci a pour effet d'augmenter un délai de réponse du serveur 3 au décodeur 1. En effet, un débit alloué à un utilisateur à travers la liaison 26 est inversement proportionnel au nombre d'utilisateurs connectés au serveur 3. En outre, un volume d'information à transmettre dans la deuxième mise en oeuvre est beaucoup plus important que dans la première mise en oeuvre ou les seules informations transitant à travers la liaison 26 sont un programme 22 1 à 22 n et une requête alors que dans la deuxième mise en oeuvre c'est le flux d'information codé qui transitent à travers cette liaison 26 une première fois à destination du serveur 3 et une deuxième fois à destination du décodeur 1. Ainsi, on aboutit à des durées d'attente du décodeur 1 qui sont trop contrariantes.

Un format compréhensible par le décodeur 1 est un format selon la norme MPEG 2 ainsi le décodeur 8 reçois des données sous un format MPEG 2 et les transforment en un signal utilisable par le téléviseur 9 généralement un signal vidéo composite.

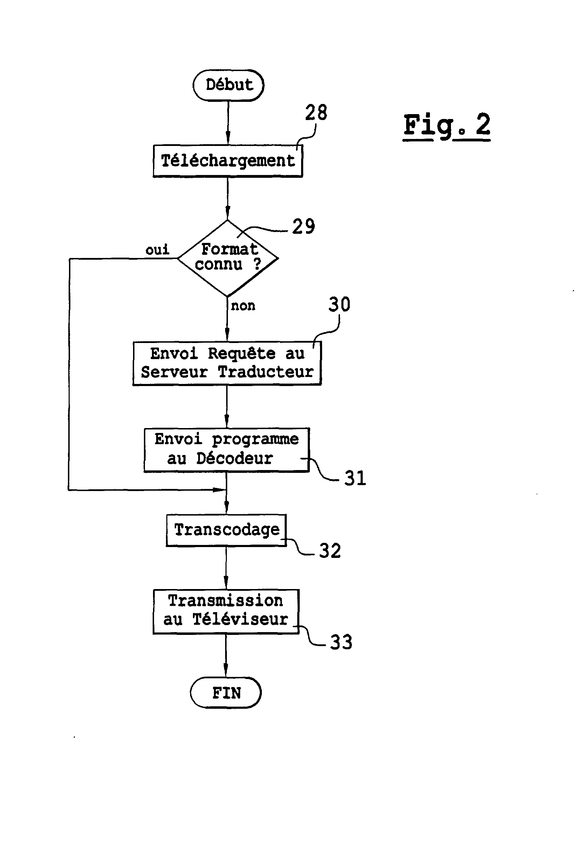

La figure 2 montre une représentation sous forme d'un logigramme montrant des principales étapes du procédé de l'invention dans sa variante préférée. Ainsi, le décodeur reçoit, dans une étape 28, un flux d'information codé en provenance par exemple du serveur 4 de la figure 1.

Une fois le flux d'information codé reçu dans le décodeur 1, une phase de test, pendant une étape 29 de test, est mise en place afin de déterminer si oui ou non le format de ce flux d'information codé est connu par le décodeur.

Dans le cas où ce format n'est pas connu du décodeur et selon l'invention, le décodeur 1 envoie, dans une étape 30, une requête au serveur 3 afin lui indiquer le format dans laquelle il a reçu le flux d'information codé.

Le serveur 3, dans une étape 31, envoie alors au décodeur 1 une copie du programme 22 1 à 22 n de transcodage correspondant au format indiqué dans la requête émise par le décodeur 1. Dès lors, le décodeur 1 peut engager une opération de transcodage pendant une étape 32 de transcodage, durant laquelle le flux d'information codé dans un format non compréhensible par le décodeur 1 est alors transcodé dans un format compréhensible par celui ci c'est à dire généralement un format MPEG 2. Ainsi, le décodeur 8 du décodeur 1 de télévision peut alors décoder de tels signaux MPEG 2 pour produire dans une étape 33 des signaux utilisables par le téléviseur 9 relié à une sortie du décodeur 8.

Dans le cas où, lors de la phase de test de l'étape 29, le format du flux d'information codé reçu est connu alors le décodeur 1 peut engager directement la phase de transcodage de l'étape 32.

L'invention s'applique tout aussi bien dans le cas où le flux d'information codé reçu est d'abord enregistré dans la mémoire 18 par exemple pour pouvoir regarder ou écouter un contenu de ce flux en temps différé. Ainsi, le procédé de l'invention s'appliquera pareillement au cas précédent sauf que le flux proviendra, à cet instant, de la mémoire 18 et non du serveur 4. En outre, dans le cas d'un message à écouter seulement, le décodeur 1 pourra en outre faire afficher sur un écran du téléviseur 9 une image ou une animation divertissante éventuellement choisie par l'utilisateur.

## Revendications

1. Procédé de transcodage d'un flux d'informations reçu dans un décodeur de télévision et codé dans un format non compréhensible par ledit décodeur, **caractérisé en ce que**
- le décodeur émet une requête à destination d'un serveur traducteur relié au décodeur par l'intermédiaire d'un réseau de données ; et
- le serveur traducteur coopère avec le décodeur pour transcoder le flux d'informations codé dans un format compréhensible par le décodeur.

2. Procédé selon la revendication 1 **caractérisé en ce que** :
- le serveur traducteur fournit au décodeur un programme de transcodage.

3. Procédé selon la revendication 2 **caractérisé en ce que** :
- le décodeur sauvegarde dans une mémoire de sauvegarde chaque programme de transcodage reçu.

4. Procédé selon la revendication 3 **caractérisé en ce que** :
- on met en oeuvre un procédé de gestion d'un encombrement de la mémoire de sauvegarde selon lequel on supprime le programme de transcodage le moins utilisé pour libérer de l'espace mémoire.

5. Procédé selon la revendication 1 **caractérisé en ce que** :
- le serveur traducteur reçoit le flux codé dans le format non compréhensible par le décodeur ;
- le serveur traducteur émet, à destination du décodeur, le flux transcodé dans un format compréhensible par le décodeur.

6. Procédé selon l'une des revendications 1 à 5 **caractérisé en ce que** :
- un format compréhensible par le décodeur est un format selon la norme MPEG2.

7. Décodeur de télévision **caractérisé en ce qu'**il est relié par l'intermédiaire d'un réseau de données à un serveur traducteur et **en ce que** le décodeur et/ou le serveur traducteur comportent un moyen de traduction leur permettant de coopérer afin de transcoder un flux d'informations reçu par le décodeur et codé dans un format non compréhensible par celui-ci.

8. Décodeur selon la revendication 7 **caractérisé en ce que** le moyen de traduction est un programme de traduction émis à destination du décodeur.
